# EUROPÄISCHE PATENTSCHRIFT

(11) **EP 0 930 983 B1**
(45) Veröffentlichungstag und Bekanntmachung des Hinweises auf die Patenterteilung: **16.05.2001**
(21) Anmeldenummer: 97947003.6
(22) Anmeldetag: 07.10.1997
(51) Int. Cl.: B60N 2/02

(54) **Verstellvorrichtung für einen Fahrzeugsitz**
Adjusting device for an automobile seat
Dispositif de réglage pour siège de véhicule

(30) Priorität: 08.10.1996 DE 19641372
(43) Veröffentlichungstag der Anmeldung: 28.07.1999
(73) Patentinhaber: IMS MORAT SÖHNE GmbH, D-78166 Donaueschingen (DE); BURGER SÖHNE GmbH + Co., D-71065 Sindelfingen (DE)
(72) Erfinder: HOFSCHULTE, Wolfram-N., D-79848 Bonndorf (DE); BREITFELD, Uwe, D-75382 Althengstett (DE); BURGER, Jörg, D-71063 Sindelfingen (DE)
(74) Vertreter: Göhring, Robert, Dipl.-Ing.
(86) Internationale Anmeldenummer: DE9702311
(87) Internationale Veröffentlichungsnummer: WO9815423

(56) Entgegenhaltungen:
- DE-A- 2 836 005
- DE-A- 3 320 704
- US-A- 3 735 645
- US-A- 4 641 887
- US-A- 4 765 582
- US-A- 4 799 403

## Beschreibung

Die Erfindung betrifft eine Verstellvorrichtung für einen Fahrzeugsitz, der eine Rückenlehne und ein von einem Sitzunterbau und einem Sitzkissen mit Seitenteil gebildeten Sitzteil aufweist und mittels Schienen längsgeführt ist, welche Verstellvorrichtung wahlweise zur Verstellung des Sitzteils hinsichtlich Höhe, Neigung oder Längsabstand vorgesehen ist, wobei es von wenigstens einem ortsfest angeordneten, zum Beispiel am Sitzunterbau, am Seitenteil oder an einer Sitzschiene, in einem Getriebegehäuse untergebrachten Umlaufrädergetriebe gebildet ist, welches wenigstens ein Sonnenrad, wenigstens ein Planetenrad sowie wenigstens ein Hohlrad aufweist, wobei das wenigstens eine Sonnenrad zur Betätigung der Verstellvorrichtung von einem Drehantrieb beaufschlagbar ist (s. zum Beispiel US-A-4 765 582, dem Oberbegriff entsprechend).

Es ist allgemein bekannt, daß die Sitze in modernen Fahrzeugen im Sinne einer ergonomisch günstigen Sitzposition der darauf befindlichen Person hinsichtlich mehrerer Parameter verstellbar sind. Dabei ist neben der Verstellmöglichkeit der Rückenlehne insbesondere die Verstellung der Sitzfläche, das heißt des Sitzteils mit dem Sitzkissen, nach Länge, Höhe und Neigung von Bedeutung.

Eine bekannte Verstellvorrichtung ist in der DE-OS 28 36 005 offenbart geworden, welche die Kinematik der Sitzverstellung sowie die zugehörigen Verstellelemente zeigt, mit denen die einzelnen Sitzkomponenten zusammenarbeiten. Ein Sitzunterteil ist über vorn und hinten angelenkte Schwenkhebelpaare mit dem Fahrzeugboden verbunden und wird entsprechend der Neigung dieser Schwenkhebel in der Höhe eingestellt. Auf diesem Sitzunterteil ist ein Tragteil angeordnet, an welchem vorn wenigstens ein Kniehebel zur Neigungseinstellung des Sitzteils angelenkt ist, dessen anderes Ende mit einem Sitzteil verbunden ist. Die ganze Sitzeinheit ist auf einer am Fahrzeugboden montierten Schiene geführt und wird mittels eines mit einer Zahnstange im Eingriff befindlichen Ritzels oder einer Spindel mit Spindelmutter längseingestellt.

Um den Sitz in der Höhe zu verstellen, wird üblicherweise in einem Gelenkpunkt der 4-Punkt-Kinematik ein Drehmoment mittels eines um den Gelenkdrehpunkt drehenden Zahnsegmentes durch ein Ritzel aufgebracht.

Das gleiche Wirkprinzip wird in der Regel zur Neigungsverstellung verwendet, hierzu dient ein weiterer Hebel vorn entweder außerhalb der 4-Punkt-Kinematik oder durch Gestaltung einer 5-Kinematik.

Ein Verstellvorrichtung mit den eingangs genannten Merkmalen, das heißt mit Verstelltrieben zur Längs-, Höhen- und Neigungsverstellung eines Fahrzeugsitzes, ist aus der o.g. US-A-4,765,582 bekannt geworden. Hierbei greift jeder Verstelltrieb beiderseits des betreffenden Fahrzeugsitzes ab und weist entweder eine Hebelmechanik für die Handbetätigung oder aber je ein elektrisch betriebenes Verstellgetriebe für jede Seite und Verstellrichtung auf.

Die Verstellgetriebe bestehen jeweils aus einem Zwischen- oder Reduziergetriebe und einem Planetengetriebe, das mit je vier Planetenrädern bestückt ist, die an einem Planetenträger befestigt und mit einem zugeordneten Sonnenrad im Eingriff sind. Die Zwischen- oder Reduziergetriebe werden jeweils über biegsame Wellen von einem zugeordneten, unterhalb des betreffenden Sitzes angeordneten Elektromotor beaufschlagt, das heißt der zugeordnete Antriebsmotor beaufschlagt zwei Verstellgetriebe. Dies macht eine Mindestgröße für die Motoren erforderlich. Ferner ist eine einfache Umrüstung von Handbetrieb auf Motorbetrieb nicht möglich, sondern erfordert jeweils den kompletten Austausch der Verstellvorrichtung. Dies ist einerseits kostspielig und macht darüberhinaus eine aufwendige Ersatzteillagerung erforderlich.

Ausgehend von diesem Stand der Technik ist es Aufgabe der vorliegenden Erfindung, eine Verstellvorrichtung für einen Fahrzeugsitz der eingangs genannten Art zu dessen Längs-, Höhen- und Neigungseinstellung anzugeben, die einfach handhabbar ist und sowohl mittels Handbetätigung als auch elektromotorisch zuverlässig arbeitet und eine hohe Selbsthemmung beim Fahrzeugcrash aufweist. Insbesondere soll die Vorrichtung möglichst vielseitig einsetzbar sein.

Diese Aufgabe wird erfindungsgemäß durch die kennzeichnenden Merkmale des Anspruchs 1 gelöst. Weitere vorteilhafte Ausgestaltungen und Verbesserungen sind in den Unteransprüchen gekennzeichnet.

Dementsprechend weist die Verstellvorrichtung gemäß der Erfindung für jede Verstellrichtung ein Umlaufrädergetriebe auf, das zwei Planetengetriebe mit einem ersten und mit einem zweiten Hohlrad sowie mit wenigstens einem gemeinsamen Planetenrad umfaßt, welches mit einem gemeinsamen Sonnenrad im Eingriff ist, wobei das erste Hohlrad und das zweite Hohlrad vorteilhafterweise jeweils eine Zahnung mit unterschiedlichem Modul (m = t/π) aufweisen, wodurch ein unterschiedlicher Drehwinkel bei Betätigung des gemeinsamen Sonnenrades resultiert.

Eine bevorzugte Ausführungsform der Erfindung sieht vor, daß das erste Hohlrad ortsfest angeordnet ist und daß das zweite Hohlrad relativ zum ersten Hohlrad konzentrisch rotiert und als Verstellglied dient. Hierdurch und aufgrund dessen, daß eines der beiden Hohlräder eine Zahnung mit einem anderen Modul aufweist, wird erreicht, daß bei Verdrehung des gemeinsamen Sonnenrades das drehbewegliche Hohlrad gegenüber dem drehfesten Hohlrad rotiert.

Entsprechend einer bevorzugten Weiterbildung der Erfindung ist als Drehantrieb ein Elektromotor vorgesehen, der über ein Vorsatzgetriebe das gemeinsame Sonnenrad beaufschlagt. Dabei ist das Vorsatzgetriebe im Hinblick auf günstige Abmessungen zweckmäßigerweise als Schneckengetriebe ausgebildet. Gemäß einer Ausgestaltung der Erfindung kann das Vorsatzgetriebe in das Getriebegehäuse integriert sein. Hierbei ist es vorteilhaft, daß der Motor an das Getriebegehäuse anschließt und mit diesem eine Baueinheit bildet.

Gemäß einer alternativen Ausgestaltung kann als Drehantrieb auch ein Handrad vorgesehen sein, welches das gemeinsame Sonnenrad beaufschlagt. Ein Vorsatzgetriebe ist in diesem Fall nicht erforderlich und kann entfallen, da die Größe des Handrades einerseits und die Höhe des aufzubringenden Drehmoments andererseits eine problemlose Betätigung von Hand gestatten.

Gemäß einer weiteren Ausgestaltung der Erfindung ist zum Spielausgleich zwischen dem Getriebegehäuse und dem Hohlrad ein Federelement angeordnet, welches das Hohlrad gegen das Getriebegehäuse verspannt. Dabei bewirken die Drehmomentabstützung zwischen dem ersten und dem zweiten Hohlrad sowie das gemeinsame Sonnenrad und das wenigstens eine Planetenrad eine von der Federkraft des Federelements abhängige Zahnflankenanlage, wodurch sowohl Verschleiß als auch die Geräuschentwicklung gemindert sind.

Bei einer weiteren vorteilhaften Ausgestaltung der Erfindung ist wahlweise das erste oder das zweite Hohlrad drehfest am Sitzunterbau, am Seitenteil oder an einer auf einer Unterschiene geführten Sitzschiene angeordnet, während das andere jeweils drehbewegliche Hohlrad das Sitzteil zur Höhen-, Neigungs- oder Abstandseinstellung des Fahrzeugsitzes betätigt. Vorteilhafterweise ist hierbei das jeweils drehbewegliche Hohlrad mit einem Hebel versehen, welcher Hebel das Sitzteil beaufschlagt.

Gemäß einer weiteren bevorzugten Ausführungsform der Erfindung ist das erste Hohlrad drehfest ausgebildet und dient als Getriebegehäuse, während das drehbewegliche zweite Hohlrad als Verstellglied mit dem Sitzteil zusammenarbeitet.

Gemäß einer Ausführungsform der erfindungsgemäßen Verstellvorrichtung zur Längseinstellung des Fahrzeugsitzes ist das Getriebegehäuse dabei am Sitzteil, vorzugsweise an der zum Sitzteil gehörigen Sitzschiene, befestigt und das drehbewegliche Hohlrad ist drehfest mit einem Ritzel verbunden, welches mit einer ortsfest an der Unterschiene angeordneten Zahnstange im Eingriff ist und so die Längseinstellung des Fahrzeugsitzes vornimmt.

Für die Höheneinstellung des Fahrzeugsitzes ist entsprechend bei einer anderen Ausführungsform der erfindungsgemäßen Verstellvorrichtung das jeweils drehbewegliche Hohlrad mit einem Schwenkhebel eines ersten Schwenkhebelpaares verbunden und beaufschlagt diesen, wobei die Schwenkhebel jeweils in entsprechenden Lagerstellen am Sitzunterbau und an der Oberschiene schwenkbeweglich angelenkt sind und diese miteinander verbinden.

Bei einer dritten Ausführungsform der erfindungsgemäßen Verstellvorrichtung ist das jeweils drehbewegliche Hohlrad mit einem Schwenkhebel eines zweiten Schwenkhebelpaares verbunden und beaufschlagt diesen, wobei auch hier die Schwenkhebel jeweils in entsprechenden Lagerstellen am Seitenteil und am Sitzkissen schwenkbeweglich angelenkt sind und diese miteinander verbinden. Bei dieser dritten Verstellvorrichtung stellt das mit dem zweiten Schwenkhebel verbundene Hohlrad die Neigung des Sitzteils ein.

Vorteilhafterweise kann in Weiterbildung der Erfindung das jeweils drehbewegliche Hohlrad mit dem schwenkbeweglichen ersten oder zweiten Schwenkhebel eine Baueinheit bilden, das heißt, an Stelle eines zum Beispiel stabförmigen Hebels ist das drehbewegliche Hohlrad an zwei Stellen jeweils mit den relativ zueinander zu bewegenden Sitzkomponenten verbunden, zum Beispiel das Seitenteil mit dem Sitzkissen für die Neigungseinstellung beziehungsweise das Seitenteil oder der Sitzunterbau mit der Oberschiene für die Höheneinstellung.

Zweckmäßigerweise sind die im Kraftfluß liegenden Elemente der Verstellvorrichtung selbsthemmend miteinander im Eingriff. Hierdurch ist gewährleistet, daß eine erfolgte Sitzeinstellung sich nicht selbsttätig verändert und eine zusätzliche Sperre oder Verstellsicherung entbehrlich ist.

Eine besonders bevorzugte Ausführungsform der Erfindung sieht an jedem Fahrzeugsitz drei ortsfest angeordnete Verstellvorrichtungen vor, wobei hiervon je eine Verstellvorrichtung zur Einstellung der Höhe des Sitzteils, zur Einstellung der Neigung des Sitzkissens sowie zur Längseinstellung des Fahrzeugsitzes dient und jede Verstelleinrichtung getrennt voneinander ansteuerbar ist. Damit ist sichergestellt, daß jede Person die jeweils beste Sitzposition einstellen kann.

Im Hinblick auf die in Fahrzeugen mitunter anzutreffenden beengten Platzverhältnisse kann es vorteilhaft sein, die Antriebseinheit, zum Beispiel nur den Motor allein oder den Elektromotor mit dem Vorsatzgetriebe, welches das gemeinsame Sonnenrad des Umlaufrädergetriebes beaufschlagt, entfernt an einer räumlich vom Ort des Umlaufrädergetriebes verschiedenen Stelle im Bereich des Fahrzeugsitzes anzuordnen. Bei diese Variante der Erfindung ist das Umlaufrädergetriebe zur Ankopplung der Antriebskraft mit dem Vorsatzgetriebe wahlweise mittels eines starren oder eines flexiblen Antriebselements miteinander verbunden. Mit dieser Besonderheit der erfindungsgemäßen Verstellvorrichtung ist es möglich, die Ausgestaltung des Fahrersitzes zu optimieren, ohne durch den Raumbedarf der erforderlichen Antriebe hieran gehindert zu sein.

Insbesondere um die Montage der vorzugsweise drei gemeinsamen Planetenräder der erfindungsgemäßen Verstellvorrichtung zu erleichtern, ist entsprechend einer weiteren zweckmäßigen Ausbildung der Erfindung eine als freier Steg bezeichnete Zapfenscheibe konzentrisch um das gemeinsame Sonnenrad angeordnet, welche entsprechend der Anzahl der zu führenden Planetenräder mit Zapfen versehen ist, welche die Planetenräder drehbeweglich aufnehmen und durch welche diese zueinander sowie radial zu dem Sonnenrad und zu den Hohlrädern im richtigen
Abstand gehalten sind.

Diese und weitere vorteilhafte Ausgestaltungen und Verbesserungen der Erfindung sind Gegenstand der Unteransprüche.

Anhand eines in der schematischen Zeichnung dargestellten Ausführungsbeispiels der Erfindung sollen die Erfindung, vorteilhafte Ausgestaltungen und Verbesserungen der Erfindung sowie besondere Vorteile der Erfindung näher erläutert und beschrieben werden.
Es zeigen:
- Fig. 1: eine Seitenansicht eines mit drei erfindungsgemäßen Verstellvorrichtungen ausgerüsteten Fahrzeugsitzes;
- Fig. 2: einen Längsschnitt durch das Umlaufrädergetriebe einer erfindungsgemäßen Verstellvorrichtung mit motorischem Antrieb;
- Fig. 3: einen Längsschnitt durch das Umlaufrädergetriebe einer erfindungsgemäßen Verstellvorrichtung mit Handantrieb;
- Fig. 4: einen Längsschnitt durch ein Getriebegehäuse einer erfindungsgemäßen Verstellvorrichtung mit motorischem Antrieb, wobei das Getriebegehäuse mit einem Hohlrad eine Baueinheit bildet;
- Fig. 5: die Anordnung gemäß Fig. 5, wobei das andere Hohlrad mit einem mit einer Zahnstange im Eingriff befindlichen Ritzel eine Baueinheit bildet;
- Fig. 6: eine Seitenansicht einer erfindungsgemäßen Verstellvorrichtung mit motorischem Antrieb;
- Fig. 7: einen Längsschnitt durch eine an einer Oberschiene befestigte erfindungsgemäße Verstellvorrichtung mit motorischem Antrieb und
- Fig. 8: eine Schrägansicht der mit einem Seitenteil zusammenwirkenden Verstellvorrichtung gemäß Fig. 7.

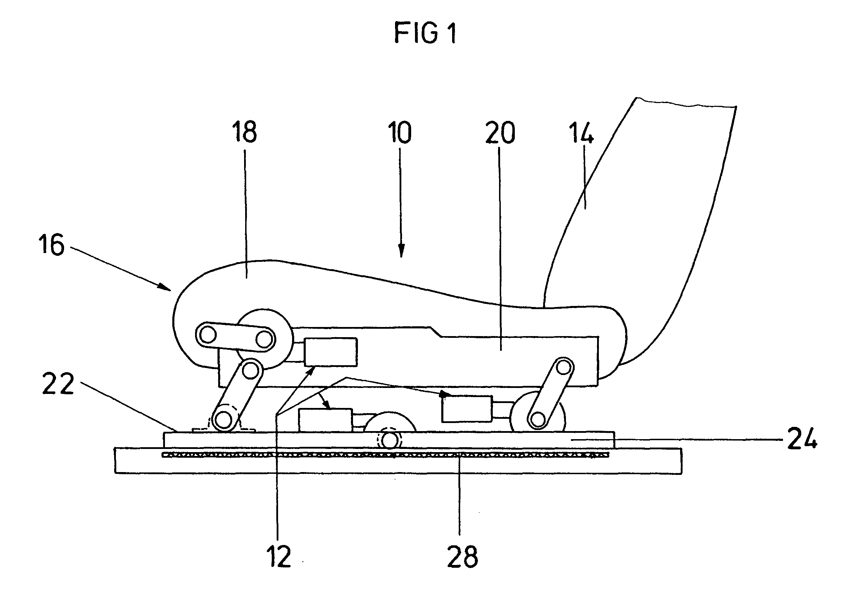

In Fig. 1 ist ein Teil eines Fahrzeugsitzes 10 mit drei erfindungsgemäßen Verstellvorrichtungen 12 gezeigt, welche jeweils von einem motorischen Antrieb beaufschlagt sind, in Seitenansicht dargestellt, um zu verdeutlichen wie die erfindungsgemäßen Verstellvorrichtungen 12 die Sitzverstellung bewirken.

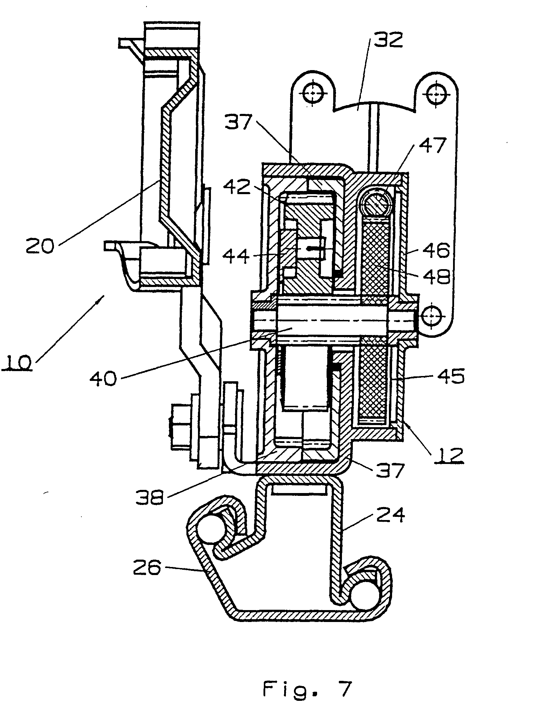

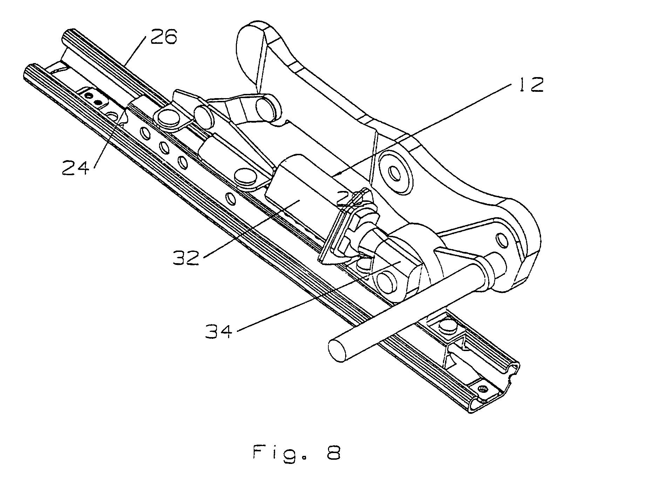

Der Fahrzeugsitz 10 ist von einer nur teilweise dargestellten Rückenlehne 14 und einem Sitzteil 16 gebildet, welches Sitzteil 16 ein Sitzkissen 18, ein Seitenteil 20 und einen Sitzunterbau 22 aufweist. Der Sitzunterbau weist, soweit hier erkennbar, im wesentlichen eine Oberschiene 24 auf, die sich auf einer in Fig. 7 im Querschnitt und in Fig. 8 in Schrägansicht dargestellten Unterschiene 26 abstützt.

Ferner ist in Fig. 1 gezeigt, daß für die erfindungsgemäße Verstellung des Fahrzeugsitzes 10, das heißt richtigerweise des Sitzteiles 16, die insgesamt drei Verstellvorrichtungen 12 an verschiedenen Orten des Fahrzeugsitzes 10 angeordnet sind, nämlich für die Höheneinstellung unterhalb des rückwärtigen Endes des Seitenteils 20, für die Neigungseinstellung seitlich am vorderen Ende des Seitenteiles 20 und für die Längseinstellung etwa mittig unterhalb des Seitenteiles 20 am Sitzunterbau 22. Dort arbeitet die Verstellvorrichtung mit einer stilisiert dargestellten, ortsfest mit dem nicht näher gezeigten Fahrzeugboden oder mit der Unterschiene 26 verbundenen Zahnstange 28 zusammen.

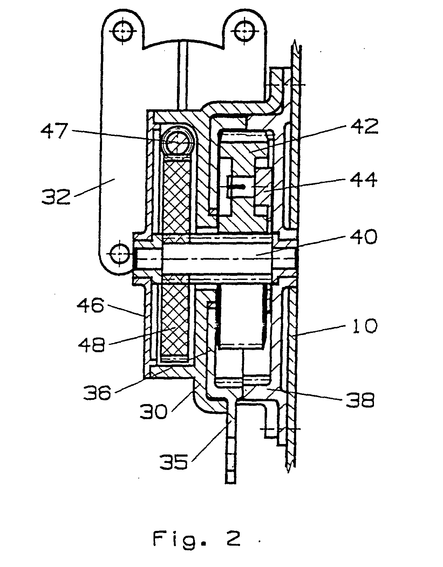

Im folgenden sollen die einzelnen Gestaltungsvarianten der erfindungsgemäßen Verstellvorrichtung anhand der Darstellungen in den Fig. 2 bis 5 näher erläutert und beschrieben werden.

In Fig. 2 ist ein Längsschnitt durch ein Getriebegehäuse 30 einer erfindungsgemäßen Verstellvorrichtung 12 gezeigt, welche von einem Elektromotor 32 als motorischem Antrieb beaufschlagt an einem nicht näher gezeigten Teil eines Fahrzeugsitzes 10 angebracht ist. Das Getriebegehäuse 30 nimmt ein Umlaufrädergetriebe 34 auf, das von einem ersten Hohlrad 36 mit einem angeformten Hebel 35 und von einem zweiten Hohlrad 38 gebildet ist, das mit einem Teil des Fahrzeugsitzes verbunden ist, sowie von einem gemeinsamen Sonnenrad 40 und von zur mechanischen Kraft- beziehungsweise Momentenübertragung dienenden Planetenrädern 42.

Die Übertragung der Antriebskraft des Motors 32 erfolgt über ein Vorsatzgetriebe 45, das in einer vom übrigen Getriebegehäuse 30 abgetrennten Kammer untergebracht ist, die von einem Deckel 46 nach außen verschlossen ist. Das Vorsatzgetriebe ist als Schneckengetriebe ausgebildet und weist eine Schnecke 47 als Ritzel und ein Schneckenrad als Abtrieb 48 auf.

Anhand der in den Fig. 1 und 2 gezeigten Ansichten wird deutlich, daß die erfindungsgemäße Verstellvorrichtung schlank und sehr kompakt gestaltet ist, so daß ihr Einbau an einem Fahrzeugsitz leicht möglich ist.

Zum besseren Verständnis werden bei den in den weiteren Figuren dargestellten Ausführungsvarianten der erfindungsgemäßen Verstellvorrichtung für gleiche Einzelheiten und Merkmale stets die gleichen Bezugsziffern verwendet.

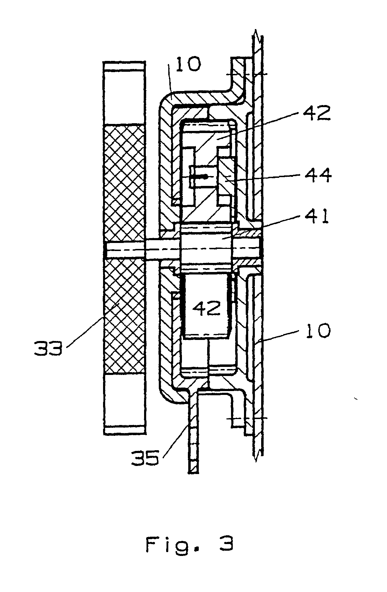

In Fig. 3 ist ebenfalls ein Längsschnitt durch ein Getriebegehäuse 31 einer weiteren sehr ähnlichen Ausgestaltung der erfindungsgemäßen Verstellvorrichtung 12 gezeigt, welche allerdings zum Unterschied von einem Handrad 33 als Antrieb beaufschlagt an einem nicht näher gezeigten Teil eines Fahrzeugsitzes 10 angebracht ist.

Abweichend von der in Fig. 2 gezeigten Ausgestaltung weist das Gehäuse 31 keine separate Kammer auf, sondern das Handrad 33 ist mit geringem Abstand zum Gehäuse 31 auf einem Achsstummel eines gemeinsamen Sonnenrades 41 aufgesteckt. Das erste Hohlrad 36 und das zweite Hohlrad 38 sowie die am freien Steg beziehungsweise von der Zapfenscheibe 44 geführten Planetenräder 42 entsprechen denen gemäß Fig. 2.

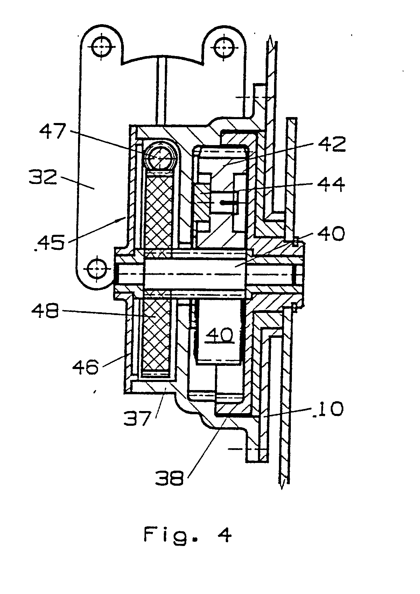

Fig. 4 zeigt einen Längsschnitt durch eine weitere Ausführungsvariante mit einem Getriebegehäuse 37 einer erfindungsgemäßen Verstellvorrichtung 12 mit motorischem Antrieb 32 , wobei das Getriebegehäuse 37 gemeinsam mit dem ersten Hohlrad eine Baueinheit bildet, die drehfest mit dem Fahrzeugsitz 10 verbunden ist. Die weiteren Merkmale dieser Ausführungsform stimmen mit denen gemäß Fig. 2 überein.

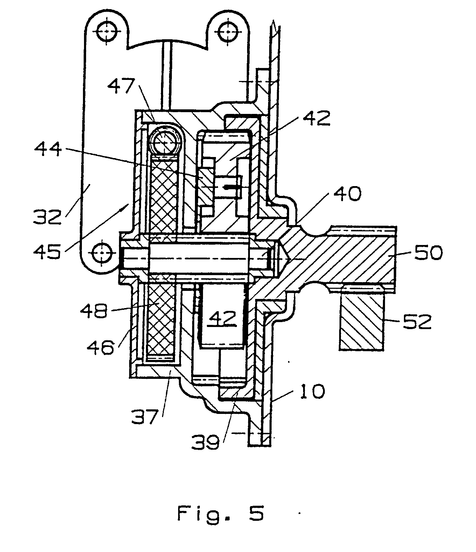

In Fig. 5 ist die gleiche Anordnung wie in Fig. 4 dargestellt, wobei allerdings hiervon abweichend das zweite Hohlrad 39 mit einem koaxial angeformten Ritzel 50 eine Baueinheit bildet. Das Ritzel 50 befindet sich im Eingriff mit einer im Querschnitt gezeigten Zahnstange 52, die ihrerseits ortsfest verankert ist und so die Längseinstellung des mit dieser Verstellvorrichtung 12 versehenen Fahrzeugsitzes 10 gestattet.

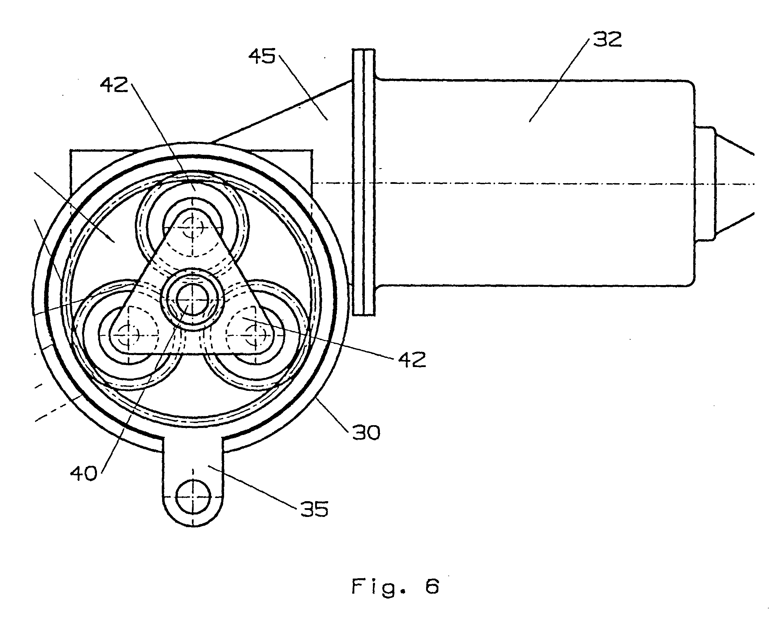

In Fig. 6 ist eine Seitenansicht der erfindungsgemäßen Verstellvorrichtung 12 gemäß Fig. 2 mit einem Elektromotor 32 als Antrieb aus Richtung der Montageseite am Sitz 10 gezeigt. Bei dieser Ansicht ist das zweite Hohlrad abgenommen, so daß ein Einblick in das Umlaufrädergetriebe 34 möglich ist. Hierbei sind das Gehäuse 30 und die von dem ersten Hohlrad 36 mit dem angeformten Stellhebel 35 umfaßten drei Planetenräder 42 zu erkennen, die um je 120 zueinander versetzt angeordnet sind, sowie die zu deren Führung dienende dreieckförmige, das Sonnenrad 40 konzentrisch umfassende Zapfenscheibe 44.

In Fig. 7 ist ein Längsschnitt durch eine an einer Oberschiene 24 eines nicht näher gezeigten Fahrzeugsitzes 10 mit einem Seitenteil 20 befestigte erfindungsgemäße Verstellvorrichtung 12 mit elektromotorischem Antrieb 32 gezeigt, deren Ausgestaltung praktisch der in Fig. 2 gezeigten Variante entspricht.

Fig. 8 schließlich zeigt eine Schrägansicht der in Fig. 7 dargestellten mit dem Seitenteil 20 zusammenwirkenden Verstellvorrichtung 12, die auf einer Oberschiene 24 angeordnet ist, die ihrerseits in der nach oben offenen, am nicht näher gezeigten Fahrzeugboden befestigten Unterschiene 26 geführt ist.

Die erfindungsgemäße Verstellvorrichtung 12 ist als reduziertes Koppelgetriebe zur Verstellung der Positionen Höhe, Neigung und Längsabstand eines Fahrzeugsitzes 10 konzipiert. Die Vorrichtung 12 besteht aus dem mit dem Fahrzeugsitz 10 unmittelbar verbundenen Getriebe 34, das in einem entsprechenden Gehäuse 30 untergebracht ist, und einem speziellen Antrieb, der als Elektromotor 32 oder als Handantrieb 33 ausgebildet ist. Der Elektromotor ist über ein modular gestaltetes Vorsatzgetriebe 45 mit dem eigentlichen Getriebe 34 verbunden, das heißt mit dem zugehörigen Sonnenrad 40.

Normalerweise ist das Vorsatzgetriebe 45, so wie in den Figuren gezeigt integraler Bestandteil der Antriebseinheit 12. Allerdings ist es gemäß der Erfindung möglich, das Vorsatzgetriebe 45 und den Elektromotor 32 entfernt anzuordnen und über eine entsprechende starre oder flexible Verbindung, zum Beispiel biegsame Welle, die Antriebsleistung auf das am Fahrzeugsitz 10 befestigte Getriebe 34 zu übertragen.

### Bezugszeichenliste

- 10: Fahrzeugsitz
- 12: Verstellvorrichtung
- 14: Rückenlehne
- 16: Sitzteil
- 18: Sitzkissen
- 20: Seitenteil
- 22: Sitzunterbau
- 24: Oberschiene
- 26: Unterschiene
- 28: Zahnstange
- 30: Getriebegehäuse
- 31: Getriebegehäuse
- 32: Elektromotor
- 33: Handrad
- 34: Umlaufrädergetriebe
- 35: Stellhebel
- 36: erstes Hohlrad
- 37: erstes Hohlrad
- 38: zweites Hohlrad
- 39: zweites Hohlrad
- 40: Sonnenrad
- 42: Planetenrad
- 44: Zapfenscheibe (freier Steg)
- 45: Vorsatzgetriebe
- 46: Deckel
- 47: Schnecke
- 48: Stirnrad
- 50: Ritzel
- 52: Zahnstange

## Patentansprüche

1. Verstellvorrichtung für einen Fahrzeugsitz (10), der eine Rückenlehne (14) und ein von einem Sitzunterbau (22) und einem Sitzkissen (18), mit Seitenteil (20) gebildetes Sitzteil (16) aufweist und mittels Schienen (24, 26) längsgeführt ist, welche Verstellvorrichtung (12) wahlweise zur Verstellung des Sitzteils (16) hinsichtlich Höhe, Neigung oder Längsabstand vorgesehen ist, wobei die Verstellvorrichtung (12) von wenigstens einem ortsfest angeordneten, in einem Getriebegehäuse untergebrachten Umlaufrädergetriebe (34) mit einem Drehantrieb gebildet ist, welches Umlaufrädergetriebe (34) wenigstens ein Sonnenrad (40) wenigstens ein Planetenrad (42) sowie wenigstens ein Hohlrad (36, 37; 38, 39) aufweist, und das wenigstens eine Sonnenrad (40) zur Betätigung der Verstellvorrichtung (12) mit dem Drehantrieb zusammenarbeitet, dadurch gekennzeichnet, daß das Umlaufrädergetriebe (34) zwei Planetengetriebe mit einem ersten und mit einem zweiten Hohlrad (36, 38; 37, 39) sowie mit wenigstens einem gemeinsamen Planetenrad (42) umfaßt, welches mit einem gemeinsamen Sonnenrad (40) im Eingriff ist, und daß das erste Hohlrad (36;37) und das zweite Hohlrad (38;39) jeweils eine Zahnung mit unterschiedlichem Modul aufweisen.

2. Verstellvorrichtung nach Anspruch 1, dadurch gekennzeichnet, daß das erste Hohlrad (36;37) ortsfest angeordnet ist und daß das zweite Hohlrad (38;39) relativ zum ersten Hohlrad (36;37) konzentrisch rotiert und als Verstellglied dient.

3. Verstellvorrichtung nach einem der vorherigen Ansprüche, dadurch gekennzeichnet, daß als Drehantrieb ein Elektromotor (32) vorgesehen ist, der über ein Vorsatzgetriebe (45) das gemeinsame Sonnenrad (40) beaufschlagt.

4. Verstellvorrichtung nach Anspruch 3, dadurch gekennzeichnet, daß das Vorsatzgetriebe (45) als Schneckengetriebe ausgebildet ist.

5. Verstellvorrichtung nach Anspruch 4, dadurch gekennzeichnet, daß das Vorsatzgetriebe (45) in das Getriebegehäuse integriert ist.

6. Verstellvorrichtung nach einem der vorherigen Ansprüche, dadurch gekennzeichnet, daß der Motor (32) an das Getriebegehäuse (30, 31) anschließt und mit diesem eine Baueinheit bildet.

7. Verstellvorrichtung nach einem der Ansprüche 1 oder 2, dadurch gekennzeichnet, daß als Antrieb ein Handrad (33) vorgesehen ist, welches das gemeinsame Sonnenrad (40), beaufschlagt.

8. Verstellvorrichtung nach einem der vorherigen. Ansprüche, dadurch gekennzeichnet, daß zum Spielausgleich zwischen dem Getriebegehäuse (30,31) und dem Hohlrad (36, 37; 38, 39) ein Federelement angeordnet ist, welches das Hohlrad (36, 37; 38, 39) gegen das Getriebegehäuse (30,31) verspannt.

9. Verstellvorrichtung nach einem der vorherigen Ansprüche, dadurch gekennzeichnet, daß wahlweise das erste oder das zweite Hohlrad (36, 37; 38, 39) drehfest am Sitzunterbau (22), am Seitenteil (20) oder an einer auf einer Unterschiene (26) geführten Sitzschiene (24,26) angeordnet ist und daß das andere jeweils drehbewegliche Hohlrad (38, 39) das Sitzteil (16) zur Höhen-, Neigungs- oder Abstandseinstellung des Fahrzeugsitzes (10) betätigt.

10. Verstellvorrichtung nach einem der vorherigen Ansprüche, dadurch gekennzeichnet, daß das jeweils drehbewegliche Hohlrad (38, 39) mit einem Hebel versehen ist, welcher Hebel das Sitzteil (16) beaufschlagt.

11. Verstellvorrichtung nach einem der vorherigen Ansprüche, dadurch gekennzeichnet, daß das erste Hohlrad (36, 37) drehfest ausgebildet ist und als Getriebegehäuse (30, 31) dient und daß das drehbewegliche zweite Hohlrad (38, 39) als Verstellglied mit dem Sitzteil (16) zusammenarbeitet.

12. Verstellvorrichtung nach einem der vorherigen Ansprüche, dadurch gekennzeichnet, daß das Getriebegehäuse (30,31) am Sitzteil (16), vorzugsweise an der zum Sitzteil (16) gehörigen Sitzschiene (24, 26), befestigt ist und daß das drehbewegliche Hohlrad (38,39) drehfest mit einem Ritzel (50) verbunden ist, welches mit einer ortsfest an der Unterschiene (26) angeordneten Zahnstange (52) im Eingriff ist und so die Längseinstellung des Fahrzeugsitzes (10) vornimmt.

13. Verstellvorrichtung nach einem der vorherigen Ansprüche 1 bis 11, dadurch gekennzeichnet, daß das jeweils drehbewegliche Hohlrad (38, 39) mit einem Schwenkhebel eines ersten Schwenkhebelpaares verbunden ist und diesen beaufschlagt, welche Schwenkhebel jeweils am Sitzunterbau (22) und an der Oberschiene (24) schwenkbeweglich angelenkt sind und diese miteinander verbinden.

14. Verstellvorrichtung nach Anspruch 13, dadurch gekennzeichnet, daß das mit dem ersten Schwenkhebel verbundene Hohlrad die Höhe des Sitzteils (16) einstellt.

15. Verstellvorrichtung nach einem der Ansprüche 1 bis 13, dadurch, gekennzeichnet, daß das jeweils drehbewegliche Hohlrad (38, 39) mit einem Schwenkhebel eines zweiten Schwenkhebelpaares verbunden ist und diesen beaufschlagt, welche Schwenkhebel jeweils am Seitenteil (20) und am Sitzkissen (18) schwenkbeweglich angelenkt sind und diese miteinander verbinden.

16. Verstellvorrichtung nach Anspruch 15, dadurch gekennzeichnet, daß das mit dem zweiten, Schwenkhebel verbundene Hohlrad die Neigung des Sitzteils (16) einstellt.

17. Verstellvorrichtung nach einem der Ansprüche 13 bis 15, dadurch gekennzeichnet, daß das jeweils drehbewegliche Hohlrad (38, 39) mit dem schwenkbeweglichen ersten oder zweiten Schwenkhebel eine Baueinheit bildet.

18. Verstellvorrichtung nach einem der vorherigen Ansprüche, dadurch gekennzeichnet, daß die im Kraftfluß liegenden Elemente der Verstellvorrichtung (12) selbsthemmend miteinander im Eingriff sind.

19. Verstellvorrichtung nach einem der vorherigen Ansprüche, dadurch gekennzeichnet, daß an jedem Fahrzeugsitz (10) drei Verstellvorrichtungen (12) ortsfest angeordnet sind, daß hiervon je eine Verstellvorrichtung (12) zur Einstellung der Höhe des Sitzteils (16), zur Einstellung der Neigung des Sitzkissens (18) sowie zur Längseinstellung des Fahrzeugsitzes (10) vorgesehen ist und daß jede Verstelleinrichtung (12) getrennt voneinander ansteuerbär ist.

20. Verstellvorrichtung nach einem der, vorherigen Ansprüche, dadurch gekennzeichnet, daß das das gemeinsame Sonnenrad (40) beaufschlagende Vorsatzgetriebe (45) vom Umlaufrädergetriebe (34) entfernt angeordnet ist und daß das Umlaufrädergetriebe (34) zur Ankopplung der Antriebskraft mit dem Vorsatzgetriebe (45) wahlweise mittels eines starren oder eines flexiblen Antriebselements miteinander verbunden ist.

21. Verstellvorrichtung nach einem der vorherigen Ansprüche, dadurch gekennzeichnet, daß die Drehmomentabstützung zwischen dem ersten und dem zweiten Hohlrad (36, 37; 38, 39) sowie das gemeinsame Sonnenrad (40) und das wenigstens eine Planetenrad (42) eine von der Federkraft des Federelements abhängige Zahnflankenanlage bewirken.

## Claims

1. An adjustment device for a vehicle seat (10), which comprises a backrest (14) and a seat part (16) formed by a seat substructure (22) and a seat cushion (18) with side part (20) and is longitudinally guided by means of rails (24, 26), which adjustment device (12) is provided as one chooses for the adjustment of the seat part (16) with respect to height, inclination or longitudinal spacing, the adjustment device (12) being formed by at least one fixed planetary gear system (34) accommodated in a gear case, which planetary gear system (34) comprises at least one sun wheel (40), at least one planet wheel (42) as well as at least one ring gear (36, 37; 38, 39), and the at least one sun wheel (40) interacts with the rotary drive for actuating the adjustment device (12),
characterised in that the planetary gear system (34) comprises two planet gears with a first and a second ring gear (36, 38; 37, 39) as well as with at least one common planet wheel (42), which is in engagement with a common sun wheel (40),
and in that the first ring gear (36; 37) and the second ring gear (38; 39) each have toothing with a different modulus.

2. An adjustment device according to Claim 1,
characterised in that the first ring gear (36; 37) is fixed
and in that the second ring gear (38; 39) rotates concentrically with respect to the first ring gear (36; 37) and serves as an adjustment member.

3. An adjustment device according to one of the preceding Claims,
characterised in that an electric motor (32), which acts on the common sun wheel (40) via an attachment gear unit (45), is provided as the rotary drive.

4. An adjustment device according to Claim 3,
characterised in that the attachment gear unit (45) is designed as worm gearing.

5. An adjustment device according to Claim 4,
characterised in that the attachment gear unit (45) is integrated in the gear case.

6. An adjustment device according to one of the preceding Claims,
characterised in that the motor (32) is joined to the gear case (30, 31) and therewith forms a structural unit.

7. An adjustment device according to one of Claims 1 or 2,
characterised in that a hand wheel (33) which acts on the common sun wheel (40) is provided as a drive.

8. An adjustment device according to one of the preceding Claims,
characterised in that a spring element, which braces the ring gear (36, 37; 38, 39) against the gear case (30, 31) is disposed between the gear case (30, 31) and the ring gear (36, 37; 38, 39) for compensation for play.

9. An adjustment device according to one of the preceding Claims,
characterised in that either the first or the second ring gear (36, 37; 38, 39) is disposed in rotation-proof manner on the seat substructure (22), on the side part (20) or on a seat rail (24, 26) guided on a lower rail (26),
and in that the other respective rotatable ring gear (38, 39) acts on the seat part (16) for the adjustment of the height, inclination or spacing of the vehicle seat (10).

10. An adjustment device according to one of the preceding Claims,
characterised in that the respective rotatable ring gear (38, 39) is provided with a lever, which lever acts on the seat part (16).

11. An adjustment device according to one of the preceding Claims,
characterised in that the first ring gear (36, 37) has a rotation-proof construction and serves as a gear case (30, 31)
and in that the rotatable second ring gear (38, 39) interacts as an adjustment member with the seat part (16).

12. An adjustment device according to one of the preceding Claims,
characterised in that the gear case (30, 31) is attached to the seat part (16), preferably to the seat rail (24, 26) belonging to the seat part (16),
and in that the rotatable ring gear (38, 39) is connected in rotation-proof manner to a pinion (50), which is in engagement with a toothed rack (52) disposed in fixed manner to the lower rail (26) and thus performs the longitudinal adjustment of the vehicle seat (10).

13. An adjustment device according to one of the preceding Claims 1 to 11,
characterised in that the respective rotatable ring gear (38, 39) is connected to a swivel lever of a first pair of swivel levers and acts thereon, which swivel levers are articulated in swivellable manner to the seat substructure (22) and to the upper rail (24) and connect them to one another.

14. An adjustment device according to Claim 13,
characterised in that the ring gear connected to the first swivel lever adjusts the height of the seat part (16).

15. An adjustment device according to one of Claims 1 to 13,
characterised in that the respective rotatable ring gear (38, 39) is connected to a swivel lever of a second pair of swivel levers and acts thereon, which swivel levers are articulated at the side part (20) and at the seat cushion (18) and connect them to one another.

16. An adjustment device according to Claim 15,
characterised in that the ring gear connected to the second swivel lever adjusts the inclination of the seat part (16).

17. An adjustment device according to one of Claims 13 to 16,
characterised in that the respective rotatable ring gear (38, 39) forms a structural unit with the swivellable first or second swivel lever.

18. An adjustment device according to one of the preceding Claims,
characterised in that the elements of the adjustment device (12) lying in the flux of force engage in self-locking manner with one another.

19. An adjustment device according to one of the preceding Claims,
characterised in that three adjustment devices (12) are fixed to each vehicle seat (10),
in that of these one adjustment device (12) is provided for the adjustment of the height of the seat part (16), for the adjustment of the inclination of the seat cushion (18) and also for the longitudinal adjustment of the vehicle seat (10) and in that each adjustment device (12) can be actuated separately from the others.

20. An adjustment device according to one of the preceding Claims,
characterised in that the attachment gear unit (45) acting on the common sun wheel (40) is disposed distant from the planetary gear system (34)
and in that the planetary gear system (34) for coupling the drive force with the attachment gear unit (45) is connected with one another either by means of a rigid or a flexible drive element.

21. An adjustment device according to one of the preceding Claims,
characterised in that the torque support between the first and the second ring gear (36, 37; 38, 39) and also the common sun wheel (40) and the at least one planet wheel (48) effect a tooth profile bearing dependent on the spring force of the spring element.

## Revendications

1. Dispositif de réglage d'un siège de véhicule (10) composé d'un dossier (14) et d'une partie d'assise (16) comprenant une partie latérale (20), une embase (22) et un coussin d'assise (18), avec guidage longitudinal sur des rails (24, 26), ce dispositif de réglage (12) prévu pour pouvoir régler à volonté la partie d'assise (16) en hauteur, en inclinaison ou en éloignement longitudinal, étant à cette fin constitué par au moins un engrenage planétaire (34) monté à poste fixe dans un boîtier avec un entraînement en rotation, l'engrenage (34) comprenant au moins une roue solaire (40) au moins une roue satellite (42) ainsi qu'au moins une roue creuse (36, 37 ; 38, 39), au moins la roue solaire (40) coopérant avec l'entraînement en rotation pour actionner le dispositif de réglage (12),
caractérisé en ce que
l'engrenage planétaire (34) est double et comprend une première et une seconde roue creuse (36, 38 ; 37, 39) ainsi qu'au moins un satellite commun (42) en prise avec une roue solaire commune (40), les dentures de la première roue creuse (36, 37) et de la seconde roue creuse (38, 39) ayant des modules différents.

2. Dispositif de réglage selon la revendication 1,
caractérisé en ce que
la première roue creuse (36, 37) est montée fixe tandis que la seconde roue creuse (38, 39) tourne concentriquement à la première (36, 37) et sert d'organe de réglage.

3. Dispositif de réglage selon l'une quelconque des revendications précédentes,
caractérisé en ce que
l'entraînement en rotation est un moteur électrique (32) qui agit sur la roue solaire commune (40) par une transmission additionnelle (45).

4. Dispositif selon la revendication 3,
caractérisé en ce que
la transmission additionnelle (45) est un engrenage à vis sans fin.

5. Dispositif selon la revendication 4,
caractérisé en ce que
la transmission additionnelle (45) est intégrée au boîtier.

6. Dispositif selon l'une quelconque des revendications précédentes,
caractérisé en ce que
le moteur (32) est raccordé au boîtier d'engrenage (30, 31) et forme une unité avec lui.

7. Dispositif selon la revendication 1 ou 2,
caractérisé en ce que
comme entraîneur on prévoit un volant à main (33) agissant sur la roue solaire commune (40).

8. Dispositif selon l'une quelconque des revendications précédentes,
caractérisé en ce que
pour compenser les jeux entre le boîtier d'engrenage (30, 31) et la roue creuse (36, 37 ; 38, 39), il est prévu un élément élastique qui précontraint la roue creuse (36, 37 ; 38, 39) par rapport au boîtier (30, 31).

9. Dispositif selon l'une quelconque des revendications précédentes,
caractérisé en ce qu'
au choix, la première ou la seconde roue creuse (36, 37 ; 38, 39) est montée fixée en rotation sur l'embase (22) du siège, ou sur la partie latérale (20) ou sur un rail de siège (24, 26) glissant sur une glissière inférieure (26), tandis que l'autre roue creuse (38, 39) pouvant tourner, actionne la partie d'assise (16) pour modifier la hauteur, l'inclinaison ou l'éloignement longitudinal du siège (10) du véhicule.

10. Dispositif selon l'une quelconque des revendications précédentes,
caractérisé en ce que
la roue creuse (38, 39) mobile est équipée d'un levier qui agit sur la partie d'assise (16).

11. Dispositif selon l'une quelconque des revendications précédentes,
caractérisé en ce que
la première roue creuse (36, 37) est fixée en rotation et sert de boîtier d'engrenage (30, 31), tandis que la seconde roue creuse (38, 39) mobile, coopère en tant qu'organe de réglage, avec la partie d'assise (16).

12. Dispositif selon l'une quelconque des revendications précédentes,
caractérisé en ce que
le boîtier d'engrenage (30, 31) est fixé à la partie d'assise (16), de préférence sur le rail de siège (24, 26) appartenant à cette partie (16), et la roue creuse (38, 39) mobile est solidaire en rotation d'un pignon (50) qui est en prise avec une crémaillère (52) montée fixe sur la glissière inférieure (26) et produit ainsi le réglage longitudinal du siège (10) du véhicule.

13. Dispositif selon l'une quelconque des revendications 1 à 11,
caractérisé en ce que
la roue creuse (38, 39) mobile en rotation est reliée par un levier basculant faisant partie d'une première paire de leviers et actionne ce levier, les leviers de cette paire étant articulés respectivement à l'embase de siège (22) et au rail supérieur (24) en les reliant ainsi.

14. Dispositif selon la revendication 13,
caractérisé en ce que
la roue creuse reliée au premier levier basculant règle la hauteur de la partie d'assise (16).

15. Dispositif selon l'une quelconque des revendications 1 à 13,
caractérisé en ce que
la roue creuse (38, 39) mobile en rotation est reliée à un levier basculant d'une seconde paire de leviers basculants et actionne ce levier, les leviers de cette paire étant articulés respectivement à la partie latérale (20) et au coussin d'assise (18) en les reliant ainsi.

16. Dispositif selon la revendication 15,
caractérisé en ce que
la roue creuse reliée au second levier basculant règle l'inclinaison de la partie de d'assise (16).

17. Dispositif selon l'une quelconque des revendications 13 à 16,
caractérisé en ce que
chaque roue creuse (38, 39) mobile en rotation forme une unité avec le premier ou le second levier basculant mobile.

18. Dispositif selon l'une quelconque des revendications précédentes,
caractérisé en ce que
les éléments du dispositif de réglage (12) qui sont en liaison dynamique sont en prise auto-bloquante entre eux.

19. Dispositif selon l'une quelconque des revendications précédentes,
caractérisé en ce que
sur chaque siège (10) de véhicule sont montés fixement trois dispositifs de réglage (12), dont chacun assure le réglage soit de la hauteur de la partie d'assise (16), soit de l'inclinaison du coussin d'assise (18), soit de l'éloignement longitudinal du siège (10) de véhicule, chaque dispositif de réglage (12) étant à commande séparée.

20. Dispositif selon l'une quelconque des revendications précédentes,
caractérisé en ce que
la transmission additionnelle (45) agissant sur la roue solaire commune (40) est montée éloignée de l'engrenage planétaire (34) qui, pour accoupler la force d'entraînement à la transmission additionnelle (45) est relié à celle-ci par un élément d'entraînement rigide ou flexible.

21. Dispositif selon l'une quelconque des revendications précédentes,
caractérisé en ce que
le support de couple entre la première et la seconde roue creuse (36, 37 ; 38, 39), ainsi que la roue solaire commune (40) et au moins une roue satellite (42) produisent une application des faces des dents qui dépend de la force exercée par l'élément élastique.
